# EUROPEAN PATENT SPECIFICATION

(11) **EP 1 419 682 B1**
(45) Date of publication and mention of the grant of the patent: **19.07.2006**
(21) Application number: 03024333.1
(22) Date of filing: 24.10.2003
(51) Int. Cl.: A01B 33/14

(54) **Tool holder assembly for machine for tilling the soil and tool for said assembly**
Werkzeughalter für ein Bodenbearbeitungsgerät und Werkzeug
ensemble porte-outils pour une machine de travail du sol et outil pour l'ensemble

(30) Priority: 12.11.2002 IT to20020976
(43) Date of publication of application: 19.05.2004
(73) Proprietor: Frandent di Ezio Bruno, 10060 Osasco (Torino) (IT)
(72) Inventor: Bruno, Ezio, 10060 Osasco (IT); Bruno, Sergio, 10060 Osasco (IT)
(74) Representative: Marchitelli, Mauro

(56) References cited:
- EP-A- 0 211 276
- EP-A- 0 891 688
- EP-A- 1 208 729
- FR-A- 2 789 543

## Description

The present invention relates to a tool holder assembly for a machine for tilling soil, in particular for a rotating harrow. The invention further relates to a tool for said assembly.

The document EP-A-891688 describes a tool holder assembly having the characteristics set out in the preamble of the main claim. This document describes a machine for tilling the soil, in particular a rotating harrow, comprising a frame that is transverse to the direction of advance of the machine during work, a plurality of tool holder rotors mounted under the frame and capable of rotating about respective vertical axes, a plurality of tools having a working part and a connecting part and destined to be mounted on the tool holder rotors according to a radial direction relative to the axis of rotation of the rotor, a plurality of seats provided on the tool holder rotors for positioning the connecting parts of the tools, and a connecting element which mutually connects at least two tools of a same tool holder rotor in such a way as to retain radially said working tools.

In the solution described in the document EP-A-891688, the connecting parts of the working tools are inserted into the respective seats with a movement in the radial direction from the exterior towards the interior relative to the axis of rotation of the tool holder rotor. After the insertion of the connecting portions of the tools into the respective seats, the connecting element is inserted and fastened to the rotor in such a way as to fasten the tools relative to the rotor against the action of the centrifugal force.

A rotating harrow is normally provided with a plurality of tool holder assemblies mutually aligned along a transverse direction relative to the direction of advance of the machine during work. The various tool holder assemblies are normally positioned close to each other. With the solution described in the document EP-A-891688, replacing the working tools requires positioning each tool holder assembly in such a way as to allow the working tools to be removed in the radial direction from the interior towards the exterior and to allow the insertion of a new tool in the radial direction from the exterior towards the interior. The operator who effects the replacement of the tools in a rotating harrow of the kind described in the aforesaid document must frequently perform a manoeuvre to orient the various tool holder assemblies before being able to remove the tools, to prevent interference with the tools of an adjacent assembly.

The object of the present invention is to provide an enhanced tool holder assembly that allows to overcome the aforesaid drawback.

According to the present invention, said object is achieved by a tool holder assembly having the characteristics set out in claim 1.

The characteristics and the advantages of the present invention shall become readily apparent from the detailed description that follows, provided purely by way of non limiting example, in which:
- Figure 1 is an exploded perspective view of a first embodiment of a tool holder assembly according to the present invention,
- Figure 2 is a perspective view of a tool destined to be used in the tool holder assembly of Figure 1,
- Figure 3 is a perspective view of the tool holder assembly,

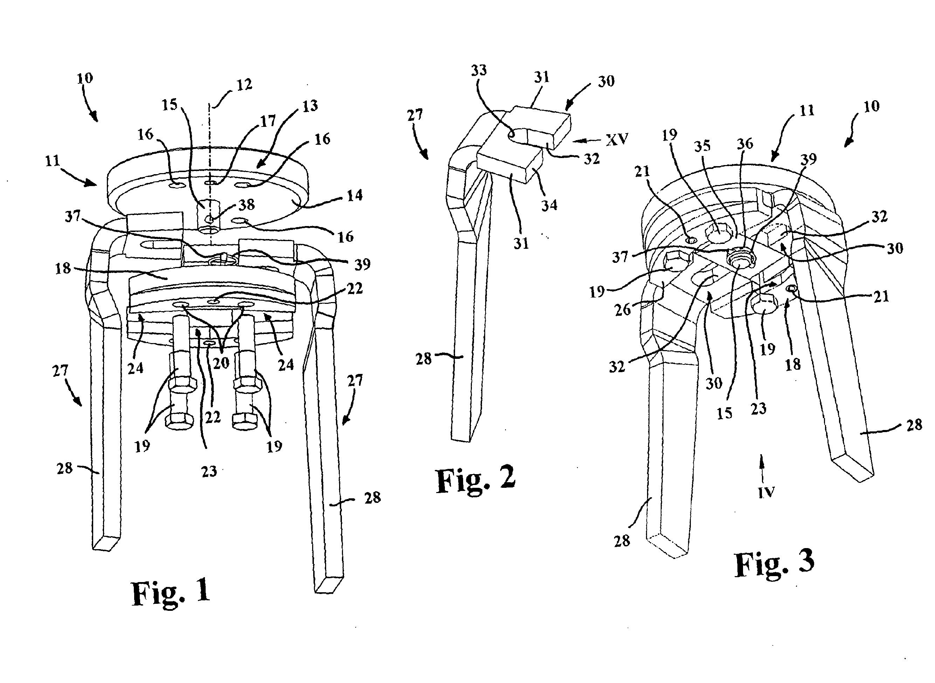

- Figure 3 is a perspective view of the tool holder assembly of Figure 1,

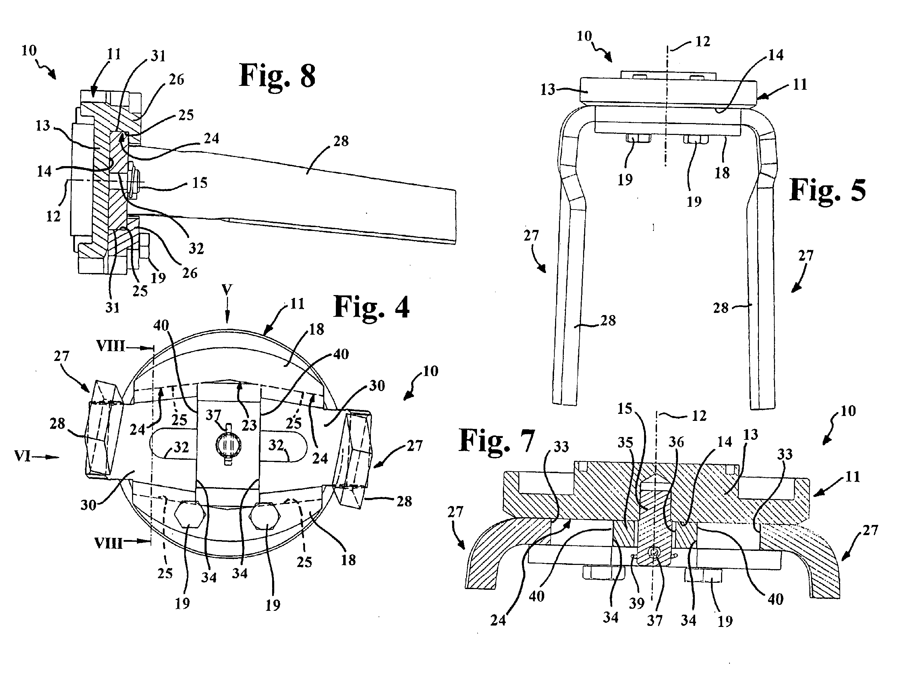

- Figure 4 is plan view according to the arrow IV of Figure 3,
- Figures 5 and 6 are side views respectively according to the arrows V and VI of Figure 4,
- Figure 7 is a section according to the line VII
- VII of Figure 6,
- Figure 8 is a section according to the line VIII
- VIII of Figure 4,

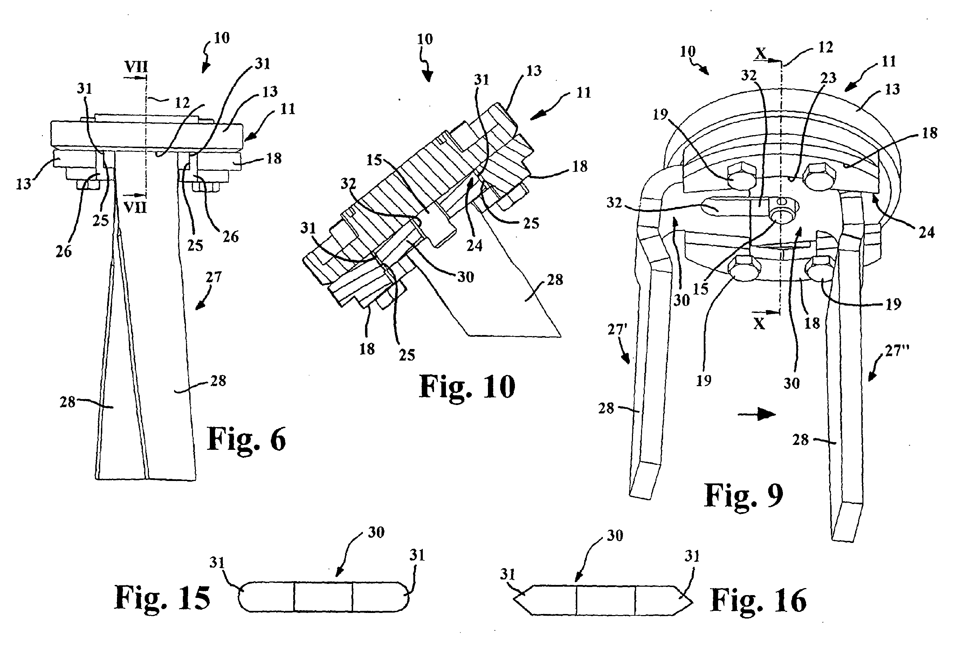

- Figure 9 is a perspective view that shows the step of assembling a tool according to the present invention,
- Figure 10 is a partial section according to the line X - X of Figure 9,

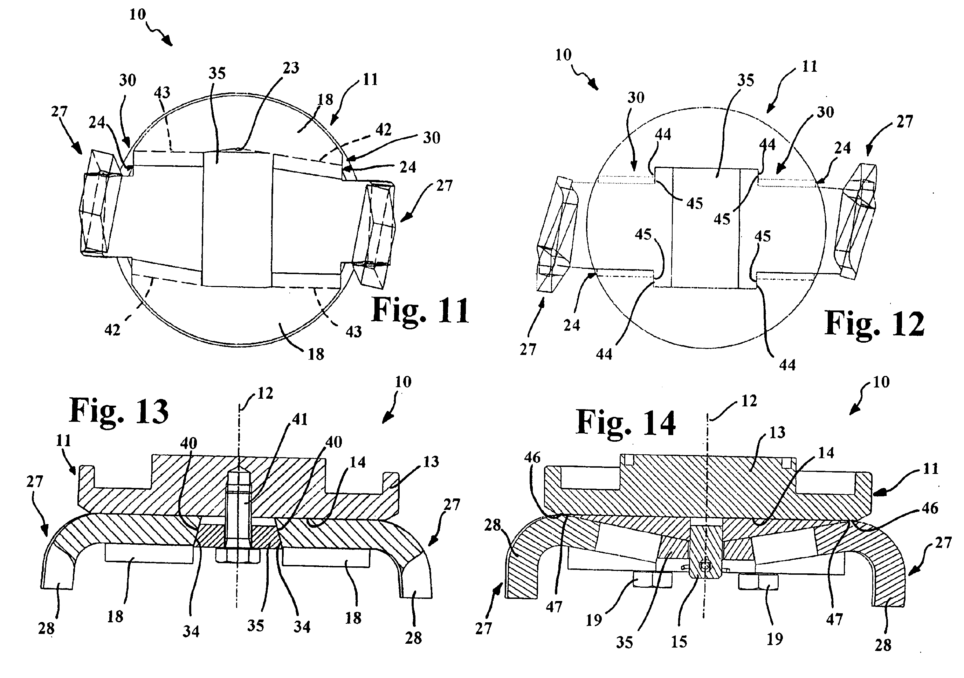

- Figure 11 is a schematic plan view showing a first variation of the present invention,
- Figure 12 is a schematic plan view showing a second variation of the present invention,
- Figure 13 is an axial section similar to Figure 7 showing an alternative embodiment of the tool retaining system,
- Figure 14 is a similar section to Figure 7, showing an additional variation of the present invention, and
- Figures 15, and 16 are schematic views according to the arrow XV of Figure 2, showing different embodiments of the fastening portion of the tool.

It should be noted that, for the sake of clarity, in some of the enclosed figure the representation of some components, which are visible in other figures, has been omitted.

With reference to Figures 1 and 3 - 7, the reference number 10 indicates a tool holder assembly according to the present invention. The tool holder assembly 10 comprises a tool holder rotor 11 able to rotate about an axis 12 which in use extends according to a vertical or substantially vertical direction. The tool holder rotor 11 comprises a disk-shaped body 13 having a planar lower surface 14. The disk-shaped body 13 is mounted in rotary fashion on a frame (not shown) and is associated to actuating means able to impart to the disk-shaped body 13 a rotation about the axis 12. Said actuating means are not shown because they are beyond the scope of the present invention. Said actuating means can be formed in any manner known in the field of soil tilling machines. A pivot pin 15 is fastened to the tool holder rotor 11. The pivot pin 15 can be fastened to the disk-shaped body 13 or to other components comprised in the tool holder rotor 11. The pivot pin 15 extends coaxially relative to the axis 12 and has a portion which projects from the lower surface 14 of the disk-shaped body 13. With reference to Figure 1, the disk-shaped body 13 is provided with holes 16 and it may be provided with holes 17.

The tool holder rotor 11 comprises a pair of retaining organs 18 fastened to the disk-shaped body 13 by means of fastening screws 19 which extend through holes 20 of the retaining organs 18 and engage respective holes 16 of the disk-shaped body 13. The holes 16 may be threaded or smooth, in which case the fastening screws engage threaded nuts (not shown). Reference pins 21 can also be provided (Figure 3), each of which engages the hole 17 of the disk-shaped body 13 and a hole 22 of the respective retaining organ 18. The retaining organs 18 are fastened against a planar surface 14 of the disk-shaped body 13. Said fastening can be considered permanent, in the sense that it is not necessary to remove the retaining organs 18 to replace the tools. The retaining organs could thus be formed integrally with the disk-shaped body 13 or they could be permanently fastened thereto, for instance by welding. The retaining organs could also be formed as a single monolithic component.

The retaining organs 18 form a central opening 23 and two retaining seats 24. Each retaining seat 24 extends in the radial direction relative to the axis of rotation 12 and has two lateral arresting surfaces 25.

Each retaining seat 24 is essentially formed by two portions 26 with substantially L shaped section of the two retaining organs 18. Said portions 26 form, together with the planar surface 14 of the disk-shaped body 13 a seat with undercut profile, open inferiorly and communicating at its inner end with the central opening 23.

In the embodiment illustrated in Figures 1 and 3 - 7, the arresting surfaces 25 of the retaining seats 24 are convergent in the radial direction from the interior towards the exterior. Hence, the radially interior end of each retaining seat 24 has a greater width than does the radially exterior end.

With reference to Figure 2, the number 27 designates a tool for tilling the soil destined to be mounted on the tool holder body 10. The tool 27 comprises a working portion 28 and a fastening portion 30. The fastening portion 30 has a complementary shape to that of a retaining seat 24. In the embodiment shown in Figure 2, the fastening portion 30 extends substantially at 90° relative to the working portion 28. The fastening portion 30 has two lateral arresting surface 31 converging towards the outer end of the fastening portion 30, i.e. towards the part from which the working portion 28 extends. The fastening portion 30 is also provided with a through opening 32 whose shape is elongated along an orthogonal direction relative to the working portion 28. The through opening 32 is preferably provided with a rounded end 33 and is preferably open on the inner frontal surface 34.

With reference to Figures 9 and 10, the manner in which a tool 27 is mounted on the tool holder assembly 10 is now described. Figure 9 shows the condition in which a first tool 27' is already mounted on the tool holder assembly 10 and a second tool 27'' is in an intermediate mounting phase. As shown in Figure 9, the tool to be mounted 27'' is inserted in the central opening 23 with an upward movement along the direction of the axis of rotation 12. The elongated opening 32 of the fastening portion 30 receives the projecting part of the pivot pin 15 fastened to the disk-shaped body 13. Figures 9 and 10 show the tool 27'' at the end of this first phase. Subsequently, the tool 27'' is moved in the radial direction from the interior towards the exterior in such a way as to insert the fastening portion 30 inside the respective seat 24. It will be understood that, in order to mount the tools 27 in this way it is necessary for the central opening 23 of the tool holder rotor 11 to have such a size as to be able to receive the fastening portion 30 of the tool 27. The tool 27'' is moved in the radial direction from the interior towards the exterior until the arresting surfaces 31 of the fastening portion 30 come into contact with the lateral arresting surfaces 25 of the respective seat 24.

When both tools 27' and 27'' have been positioned in the seats 24 in the manner described above, a spacer organ 35 is inserted in the central opening 23 of the tool holder rotor 11. As shown in Figures 3 through 7, the spacer organ 35 is constituted by a rectangular plate with a central hole 36 which receives the projecting part of the pivot pin 15. The spacer organ 35 is fastened to the pivot pin 15 for instance by means of a pin 37 inserted in a transverse hole 38 formed at the end of the pivot pin 15. The pin 37 can be of the kind that includes a ring 39 that after the insertion of the pin 37 is positioned a shown in Figures 3 through 7.

The sole purpose of the spacer organ 35 is to prevent the movement of the tools 27 in the radial direction from the exterior towards the interior. In the embodiment shown in Figures 3 through 7, the spacer organ 35 has abutment walls 40 parallel to the axis 12 which form an arresting abutment against which act the inner frontal surfaces 34 of the tools 27. In the variation shown in Figure 13, the spacer organ 35 has abutment walls 40 inclined relative to the axis 12 and converging upwards. The abutment walls 40 co-operate with surfaces 34 with equal inclination of the tools 27. In the embodiment of Figure 13 the spacer organ is fastened to the disk-shaped body 13 of the tool holder rotor 11 by means of a screw 41. It will be understood that tightening the screw 41 causes the upward motion of the spacer organ 35 which, by means of the contact between the inclined surfaces 40, 34 thrusts the tools 27 outwards until the arresting surfaces 31 of the tools 27 come in contact with the corresponding arresting surfaces 25 of the seats 24.

In the embodiment described heretofore, the fastening portion 30 of each tool 27 has substantially wedge-shaped arresting surfaces which come in arresting contact with complementarily shaped surfaces of the respective seat 24. Use of two wedge shaped surfaces is merely one of the possible embodiments of the present invention. The invention includes any solution achieving a condition whereby the tools are arrested following their movement in the radial or substantially radial direction from the interior towards the exterior in the respective seats 24. The centrifugal force that acts on the tools 27 in operation maintains the mutually co-operating arresting surfaces of the tools 27 and of the seats 24 in conditions of mutual contact. The centrifugal force thus tends to improve rather than diminish the fastening conditions of the tools 27 relative to the tool holder rotor 11.

Figures 11 and 12 show two variations of the system for arresting the tools with movement in the radial direction from the interior to the exterior. In the variation of Figure 11, the fastening portion 30 of each tool has an inclined arresting surface 42 and a surface 43 that is parallel to the direction of insertion of the tools. It is therefore sufficient for the fastening portion 30 of each tool 27 to have only an arresting surface to determine the arrest following the movement in the radial direction from the interior to the exterior.

In the variation of Figure 12, the fastening portion 30 of each tool 27 has no wedge shaped surfaces. The arresting contact is obtained by means of abutment surfaces 44 provided on each fastening portion 30 and orthogonal to the direction of insertion of tools into the respective seats. The abutment surfaces 44 co-operate with corresponding arresting surfaces 45 formed at the inlet of the seats 24.

Figure 14 shows an additional variation of the present invention. In this case, the seats 24 are not exactly radial relative to the axis 12. The seats 24, in a vertical plane passing through the axis 12, are inclined upwards with reference to a radial direction that goes from the interior to the exterior. Consequently, the fastening portion 30 of each tool 27 form an angle of less than 90° relative to the working portions 28. In this case, too the fastening portions 30 of the tools 27 are inserted into the respective seats with a motion directed from the interior to the exterior. In this case the movement is not perfectly radial but rather substantially radial relative to the axis 12. In this case too the fastening portion 30 of each tool 27 has at least an arresting surface which comes into abutment with a retaining surface of the tool holder rotor 11. In the variation shown in Figure 14, the flanks of the fastening portion 30 of each tool 27 could be mutually parallel and the arresting contact could take place between the surfaces 46 and 47 of the disk-shaped body 13 and of the fastening portions 30.

Lastly, as schematically shown in Figures 15 and 16, the lateral surfaces of the fastening portion 30 can have a different profile from the rectilinear one shown in the previous embodiments. In particular, the lateral surfaces 31 can have a rounded profile (Figure 15) or a triangular profile (Figure 16). The shapes of the lateral surfaces shown in Figures 15 and 16 increase the contact surface between the fastening portion 30 and the seat 24 reducing contact pressures and wear on the fastening portions of the tools. The lateral portions of the fastening portions 30 of the tools may naturally assume any other shape suited to increase the contact surfaces with the respective seats 24.

The present invention may be subject to numerous variations without thereby departing from the scope of the invention as it is defined by the claims that follow. For example, the number of tools 27 with which each tool holder assembly is provided may vary from what is illustrated herein. With the system according to the present invention it is possible to provide just a single tool for each tool holder assembly or a number of tools greater than two, for instance three, four or more. The tools 27 may assume a different shape from the one shown by way of example in the figures.

## Claims

1. Tool holder assembly for a machine for tilling the soil, in particular for a rotating harrow, comprising:
- a rotating tool holder rotor (11),
- at least one tool (27) having a working portion (28) and a fastening portion (30),
- at least one seat (24) provided on the tool holder rotor (11) and shaped in such a way as to receive the fastening portion (30) of said tool (27),
**characterised in that** said seat (24) is so shaped as to receive said fastening portion (30) with a movement from the interior to the exterior of the tool holder rotor (11) in the radial direction and **in that** the fastening portion (30) comprises at least one arresting surface (31, 44, 47) which comes in contact with a corresponding arresting surface (25, 45, 46) of the tool holder rotor (11) following said movement from the interior to the exterior.

2. Tool holder assembly as claimed in claim 1, **characterised in that** the fastening portion (30) of each tool (27) and the corresponding seat (24) of the tool holder rotor (11) are so shaped as to increase the retaining force with the increase of the centrifugal force which in use acts on said tools (27).

3. Tool holder assembly as claimed in claim 2, **characterised in that** the fastening portion (30) of each tool (27) and the corresponding seat (24) have a general wedge-like shape with a section of lesser width located in radially exterior position.

4. Tool holder assembly as claimed in claim 1, **characterised in that** said seat (24) communicates with an opening (23) adapted to receive the fastening portion (30) of a tool (27) with a movement directed upwards.

5. Tool holder assembly as claimed in claim 1, **characterised in that** the fastening portion (30) of the tool (27) comprises abutment surfaces (44) that are orthogonal relative to the direction of motion of the tool (27) in the respective seat (24).

6. Tool holder assembly as claimed in claim 1, **characterised in that** said seat (24) in a plane passing through the axis of rotation (12) of the tool holder assembly (10) is inclined by an angle different from 90° relative to the axis of rotation (12).

7. Tool holder assembly as claimed in claim 1, **characterised in that** it comprises a spacer organ (35) positioned in such a way as to prevent the movement of said tool (27) from the exterior to the interior.

8. Tool holder assembly as claimed in claim 7, **characterised in that** said spacer organ (35) is positioned in such a way as to exert on said tool (27) a force directed from the interior to the exterior, tending to maintain in relative contact the arresting surfaces of the fastening portion (30) and of the tool holder rotor (11).

9. Tool holder assembly as claimed in claim 7, **characterised in that** the tool holder rotor (11) is provided with a projecting pivot pin (15) adapted to bear said spacer organ (35), and **in that** the fastening portion (30) of said tool (27) is provided with a through opening (32) adapted to receive the projecting portion of said pivot pin (15) before the movement from the interior to the exterior which brings the fastening portion (30) inside each seat (24).

10. Tool holder assembly as claimed in claim 1, **characterised in that** the fastening portion (30) of said tool (27) has lateral portions with a rounded surface.

11. Tool holder assembly as claimed in claim 1, **characterised in that** the fastening portion (30) of said tool (27) has lateral portions (31) with triangularly shaped profile.

12. A tool for tilling the soil **characterised in that** it is destined to be mounted on a tool holder assembly as claimed in one or more of the previous claims.

13. A tool as claimed in claim 12, **characterised in that** it comprises a working portion (28) and a fastening portion (30) that is orthogonal or substantially orthogonal relative to said working portion (28).

14. A tool as claimed in claim 13, **characterised in that** said fastening portion (30) comprises at least one arresting portion (31, 42, 44, 47) adapted to come in contact with a corresponding arresting surface of said tool holder rotor (11) following a movement of the tool (27) from the interior to the exterior relative to the tool holder rotor (11).

15. A tool as claimed in claim 14, **characterised in that** said fastening portion (30) has a general wedge-like shape.

16. A tool as claimed in claim 15, **characterised in that** the fastening portion (30) has arresting surfaces (44) that are orthogonal relative to the direction of motion of the tool in the respective seat.

## Patentansprüche

1. Werkzeughalter für ein Bodenbearbeitungsgerät, insbesondere für eine Kreiselegge, umfassend:
- einen drehbaren Werkzeughalterrotor (11),
- mindestens ein Werkzeug (27) mit einem Arbeitsabschnitt (28) und einem Befestigungsabschnitt (30),
- mindestens einen in dem Werkzeughalterrotor (11) ausgebildeten Sitz (24), der so geformt ist, dass er den Befestigungsabschnitt (30) des Werkzeugs (27) aufnimmt,
**dadurch gekennzeichnet, dass** der Sitz (24) so geformt ist, dass er den Befestigungsabschnitt (30) mit einer in der radialen Richtung von innen nach außen erfolgenden Bewegung des Werkzeughalterrotors (11) aufnimmt, und dass der Befestigungsabschnitt (30) mindestens eine Arretierfläche (31, 44, 47) aufweist, die als Folge dieser Bewegung von innen nach außen mit einer entsprechenden Arretierfläche (25, 45, 46) des Werkzeughalterrotors (11) in Kontakt kommt.

2. Werkzeughalter nach Anspruch 1, **dadurch gekennzeichnet, dass** der Befestigungsabschnitt (30) jedes Werkzeugs (27) und der entsprechende Sitz (24) des Werkzeughalterrotors (11) so ausgebildet sind, dass sich die Haltekraft bei einem Anstieg der beim Gebrauch auf die Werkzeuge (27) wirkenden Zentrifugalkraft erhöht.

3. Werkzeughalter nach Anspruch 2, **dadurch gekennzeichnet, dass** der Befestigungsabschnitt (30) jedes Werkzeugs (27) und der entsprechende Sitz (24) eine im Allgemeinen keilförmige Ausbildung haben, wobei der Abschnitt mit der geringeren Breite an einer radial außen liegenden Stelle angeordnet ist.

4. Werkzeughalter nach Anspruch 1, **dadurch gekennzeichnet, dass** der Sitz (24) mit einer Öffnung (23) in Verbindung steht, die so ausgebildet ist, dass sie den Befestigungsabschnitt (30) eines Werkzeugs (27) mit einer nach oben gerichteten Bewegung aufnimmt.

5. Werkzeughalter nach Anspruch 1, **dadurch gekennzeichnet, dass** der Befestigungsabschnitt (30) des Werkzeugs (27) Anschlagflächen (44) aufweist, die rechtwinklig relativ zu der Bewegungsrichtung des Werkzeugs (27) in dem entsprechenden Sitz (24)- angeordnet sind.

6. Werkzeughalter nach Anspruch 1, **dadurch gekennzeichnet, dass** der Sitz (24) in einer durch die Rotationsachse (12) des Werkzeughalters (10) verlaufenden Ebene in einem nicht 90° betragenden Winkel gegenüber der Rotationsachse (12) geneigt ist.

7. Werkzeughalter nach Anspruch 1, **dadurch gekennzeichnet, dass** er einen Abstandshalter (35) aufweist, der so angeordnet ist, dass er die Bewegung des Werkzeugs (27) von außen nach innen verhindert.

8. Werkzeughalter nach Anspruch 7, **dadurch gekennzeichnet, dass** der Abstandshalter (35) so angeordnet ist, dass er auf das Werkzeug (27) eine von innen nach außen gerichtete Kraft ausübt, wodurch der Kontakt zwischen den Arretierflächen des Befestigungsabschnitts (30) und des Werkzeughalterrotors (11) aufrechterhalten wird.

9. Werkzeughalter nach Anspruch 7, **dadurch gekennzeichnet, dass** der Werkzeughalterrotor (11) mit einem vorstehenden Drehzapfen (15) versehen ist, der zum Halten des Abstandshalters (35) geeignet ist, und dass der Befestigungsabschnitt (30) des Werkzeugs (27) eine Durchgangsöffnung (32) aufweist, die zum Aufnehmen des vorstehenden Teils des Drehzapfens (15) geeignet ist, bevor die Bewegung von innen nach außen stattfindet, wodurch der Befestigungsabschnitt (30) in dem jeweiligen Sitz (24) platziert wird.

10. Werkzeughalter nach Anspruch 1, **dadurch gekennzeichnet, dass** der Befestigungsabschnitt (30) des Werkzeugs (27) seitliche Abschnitte mit einer gerundeten Oberfläche aufweist.

11. Werkzeughalter nach Anspruch 1, **dadurch gekennzeichnet, dass** der Befestigungsabschnitt (30) des Werkzeugs (27) seitliche Abschnitte (31) mit einem dreieckigen Profil aufweist.

12. Bodenbearbeitungswerkzeug, **dadurch gekennzeichnet, dass** es zur Befestigung an einem Werkzeughalter nach einem oder mehreren der vorhergehenden Ansprüche bestimmt ist.

13. Werkzeug nach Anspruch 12, **dadurch gekennzeichnet, dass** es einen Arbeitsabschnitt (28) und einen Befestigungsabschnitt (30), der sich rechtwinklig oder im Wesentlichen rechtwinklig relativ zu dem Arbeitsabschnitt (28) erstreckt, umfasst.

14. Werkzeug nach Anspruch 13, **dadurch gekennzeichnet, dass** der Befestigungsabschnitt (30) mindestens eine Arretierfläche (31, 42, 44, 47) aufweist, die so ausgebildet ist, dass sie als Folge einer Bewegung des Werkzeugs (27) von innen nach außen relativ zu dem Werkzeughalterrotor (11) mit einer entsprechenden Arretierfläche des Werkzeughalterrotors (11) in Kontakt kommt.

15. Werkzeug nach Anspruch 14, **dadurch gekennzeichnet, dass** der Befestigungsabschnitt (30) eine im Allgemeinen keilförmige Ausbildung hat.

16. Werkzeug nach Anspruch 15, **dadurch gekennzeichnet, dass** der Befestigungsabschnitt (30) Arretierflächen (44) aufweist, die sich rechtwinklig zu der Bewegungsrichtung des Werkzeugs in dem jeweiligen Sitz erstrecken.

## Revendications

1. Ensemble porte-outil destiné à une machine pour le travail du sol, en particulier pour une herse rotative comprenant :
- un rotor porte-outil rotatif (11),
- au moins un outil (27) ayant une partie de travail (28) et une partie de fixation (30),
- au moins un support (24) prévu sur le rotor porte-outil (11) et profilé de façon à recevoir la partie de fixation (30) dudit outil (27),
**caractérisé en ce que** ledit support (24) est profilé de façon à recevoir ladite partie de fixation (30) avec un mouvement de l'intérieur vers l'extérieur du rotor porte-outil (11) dans la direction radiale et **en ce que** la partie de fixation (30) comprend au moins une surface d'arrêt (31, 44, 47) qui vient en contact avec une surface d'arrêt correspondante (25, 45, 46) du rotor porte-outil (11) en suivant ledit mouvement de l'intérieur vers l'extérieur.

2. Ensemble porte-outil selon la revendication 1, **caractérisé en ce que** la partie de fixation (30) de chaque outil (27) et le support correspondant (24) du rotor porte-outil (11) sont profilés de façon à accroître la force de retenue avec l'augmentation de la force centrifuge qui lors de l'utilisation agit sur lesdits outils (27).

3. Ensemble porte-outil selon la revendication 2 **caractérisé en ce que** la partie de fixation (30) de chaque outil (27), et le support correspondant (24) sont de forme générale cunéaire avec une section de largeur inférieure située dans la position extérieure radiale.

4. Ensemble porte-outil selon la revendication 1, **caractérisé en ce que** ledit support (24) communique avec une ouverture (23) conçue pour recevoir la partie de fixation (30) d'un outil (27) avec un mouvement dirigé vers le haut.

5. Ensemble porte-outil selon la revendication 1, **caractérisé en ce que** la partie de fixation (30) de l'outil (27) comprend des surfaces de butée (44) qui sont orthogonales par rapport à la direction du mouvement de l'outil (27) dans leur support respectif (24).

6. Ensemble porte-outil selon la revendication 1, **caractérisé en ce que** ledit support (24) dans un plan passant à travers l'axe de rotation de l'outil (12) de l'ensemble porte-outil (10) est incliné d'un angle différent de 90° par rapport à l'axe de rotation (12).

7. Ensemble porte-outil selon la revendication 1, **caractérisé en ce qu'**il comprend un élément d'entretoise (35) positionné de façon à empêcher le mouvement dudit outil (27) de l'extérieur vers l'intérieur.

8. Ensemble porte-outil selon la revendication 7, **caractérisé en ce que** l'élément d'entretoise (35) est positionné de façon à exercer sur ledit outil (27) une force dirigée de l'intérieur vers l'extérieur, tendant à maintenir en contact relatif les surfaces d'arrêt de la partie de fixation (30) et du rotor porte-outil (11).

9. Ensemble porte-outil selon la revendication 7, **caractérisé en ce que** le rotor porte-outil (11) est doté d'un axe de pivot en saillie (15) conçu pour porter ledit élément d'entretoise (35), et **en ce que** la partie de fixation (30) dudit outil (27) est dotée d'une ouverture traversante (32) conçue pour recevoir la partie en saillie dudit axe de pivot (15) avant le mouvement de l'intérieur vers l'extérieur qui amène la partie de fixation (30) à l'intérieur de chaque support (24).

10. Ensemble porte-outil selon la revendication 1, **caractérisé en ce que** la partie de fixation (30) dudit outil (27) comporte des parties latérales avec une surface arrondie.

11. Ensemble porte-outil selon la revendication 1, **caractérisé en ce que** la partie de fixation (30) dudit outil (27) comporte des parties latérales (31) avec un profil de forme triangulaire.

12. Outil pour le travail du sol **caractérisé en ce qu'**il est destiné à être monté sur un ensemble porte-outil selon l'une ou plusieurs des revendications précédentes.

13. Outil selon la revendication 12, **caractérisé en ce qu'**il comprend une partie de travail (28) et une partie de fixation (30) qui est orthogonale ou sensiblement orthogonale par rapport à ladite partie de travail (28).

14. Outil selon la revendication 13, **caractérisé en ce que** ladite partie de fixation (30) comprend au moins une partie d'arrêt (31, 42, 44, 47) conçue pour venir en contact avec une surface d'arrêt dudit rotor porte-outil (11) en suivant un mouvement de l'outil (27) de l'intérieur vers l'extérieur par rapport au rotor porte-outil (11).

15. Outil selon la revendication 14, **caractérisé en ce que** ladite partie de fixation (30) est de forme générale cunéaire.

16. Outil selon la revendication 15, **caractérisé en ce que** la partie de fixation (30) comprend des surfaces d'arrêt (44) qui sont orthogonales par rapport à la direction de mouvement de l'outil dans le support respectif.
